# EUROPÄISCHE PATENTSCHRIFT

(11) **EP 2 337 980 B1**
(45) Veröffentlichungstag und Bekanntmachung des Hinweises auf die Patenterteilung: **26.12.2012**
(21) Anmeldenummer: 09778175.1
(22) Anmeldetag: 28.08.2009
(51) Int. Cl.: F16K 39/02

(54) **WEGEVENTIL**
CONTROL VALVE
DISTRIBUTEUR

(30) Priorität: 28.08.2008 DE 102008044861; 07.08.2009 DE 102009036596
(43) Veröffentlichungstag der Anmeldung: 29.06.2011
(73) Patentinhaber: Robert Bosch GmbH, 70469 Stuttgart (DE)
(72) Erfinder: ENGERT, Holger, 97855 Triefenstein (DE); FESER, Hubert, 97737 Gemünden (DE)
(74) Vertreter: Thürer, Andreas
(86) Internationale Anmeldenummer: PCT/EP2009/006244
(87) Internationale Veröffentlichungsnummer: WO 2010/022960

(56) Entgegenhaltungen:
- GB-A- 2 164 423
- JP-A- 63 009 784
- JP-U- 53 011 723
- US-A- 1 112 233
- US-A- 3 601 147
- US-A- 5 277 403
- US-A- 5 497 975

## Beschreibung

Die Erfindung betrifft ein Wegeventil gemäß dem Oberbegriff des Patentanspruches 1.

Derartige Wegeventile sind beispielsweise aus der WO 2006/042508 A1 der Anmelderin bekannt. Das in der genannten Schrift gezeigte Wegeventil, welches auch als Aktivlogik bezeichnet wird hat z.B. eine Rückschlagfunktion und wird beispielsweise im hydraulischen Antrieb einer Gießeinheit einer Druckgussmaschine eingesetzt. Dabei kann ein Gießzylinder mit Niederdruck aus einem Niederdruckspeicher oder mit Hochdruck beaufschlagt werden. Das Aktivlogik ist im Druckmittelströmungspfad zwischen dem Niederdruckspeicher und dem Gießzylinder angeordnet und ermöglicht bei Niederdruckbeaufschlagung eine Druckmittelverbindung vom Niederdruckspeicher zum Gießzylinder, während bei Hochdruckaufbau das Aktivlogik als Rückschlagventil wirkt und den Druckmittelströmungspfad zum Niederdruckspeicher mit hoher Dynamik sperrt.

Bei der bekannten Lösung ist das Aktivlogik als vorgesteuertes Ventil ausgeführt. Ein Hauptkolben einer Hauptstufe hat eine in Öffnungsrichtung wirksame, vergleichsweise kleine Ringstirnfläche, die über die Vorsteuerung mit Tankdruck oder einem höheren Druck, beispielsweise dem Druck im Niederdruckspeicher der Gießeinheit beaufschlagbar ist. Eine ausgangsseitige Stirnfläche des Hauptkolbens ist ebenfalls in Öffnungsrichtung vom Druck am Ausgang des Aktivlogik beaufschlagt. In Schließrichtung wirken auf den Hauptkolben eine Feder sowie der Druck in einem rückwärtigen Druck- oder Federraum, der über eine Ausgleichsbohrung mit dem Ausgang verbunden ist. Somit wirkt bei geschlossenem Aktivlogik im Federraum etwa der gleiche Druck wie auf die ausgangsseitige Stirnfläche. Der Hauptkolben bleibt solange in seiner Schließposition, wie die Öffnungsrichtung wirksame Ringstirnfläche druckentlastet ist. Zum Öffnen der Hauptstufe wird diese Ringstirnfläche mit dem vergleichsweise höheren Druck beaufschlagt, so dass der Hauptkolben gegen die Kraft der Feder von seinem Sitz abgehoben wird und einen Öffnungsquerschnitt aufsteuert und das Druckmittel vom radialen Eingangsanschluss zum axialen Ausgangsanschluss hin abströmen kann. Es zeigte sich, dass in diesem dynamischen Betrieb, d.h. bei durchströmtem Aktivlogik Strömungskräfte in Schließrichtung wirken, so dass die in Öffnungsrichtung wirksamen Flächenanteile des Hauptkolbens, beispielsweise die Ringstirnfläche vergrößert werden müssen. Um die insbesondere bei den eingangs beschriebenen Gießeinheiten erforderlichen kurzen Stellzeiten zu ermöglichen, müssen jedoch die aktiven Flächen und die dadurch begrenzten Volumina sehr klein gehalten werden, um die Dynamik des Aktivlogik nicht negativ zu beeinflussen.

Eine solche Vorrichtung ist aus EP 3601147 bekannt.

Demgegenüber liegt der Erfindung die Aufgabe zugrunde, ein Wegeventil zu schaffen, das mit hoher Dynamik ansteuerbar ist.

Diese Aufgabe wird durch ein Wegeventil mit den Merkmalen des Patentanspruches 1 gelöst.

Dadurch wird nicht der auf den Mittelbereich des Hauptkolbens wirkende Ausgangsdruck abgegriffen sondern der in den Randbereichen des Hauptkolbens wirksame geringere Druck. Dieser vergleichsweise geringe Druck wird dann in den rückwärtigen Federraum gemeldet, so dass in Schließrichtung ein geringerer Druck als beim Stand der Technik wirkt, so dass auch bei einer Durchströmung des Wegeventils die in Schließrichtung wirksamen Strömungskräfte verringert sind und somit die in Öffnungsrichtung wirksame Ringstirnfläche nicht oder nur in sehr geringem Maße vergrößert werden muss. Mit dieser erfindungsgemäßen Konstruktion lässt sich eine etwa lineare Kennlinie des Wegeventils erzielen.

Die Erfindung macht sich dabei die Erkenntnis zu Nutze, dass bei einer Durchströmung des Ventils vom radialen Eingangsanschluss zum axialen Ausgangsanschluss die Druckmittelströmungsgeschwindigkeit im Randbereich des Hauptkolbens aufgrund des vergleichsweise kleinen aufgesteuerten Durchströmungsquerschnitts sehr hoch ist, während im mittleren Bereich, der sich zu dem vergleichsweise großen Ausgangskanal hin öffnet, eine vergleichsweise geringe Strömungsgeschwindigkeit einstellt. Es ergibt sich über den Querschnitt des Hauptkolbens gesehen ein etwa parabolisches Geschwindigkeitsprofil mit einem Maximum in den Randbereichen und einem Minimum in den mittleren Bereichen. Nach dem Gesetz von Bernoulli verhält sich der Druck in durchströmten Systemen umgekehrt proportional zur Strömungsgeschwindigkeit. Dies bedeutet, dass in den Randbereichen, in denen eine hohe Strömungsgeschwindigkeit vorliegt, ein vergleichsweise geringer Druck auf den Hauptkolben wirkt, während sich in den axialen, mittleren Bereichen mit geringer Strömungsgeschwindigkeit ein vergleichsweise hoher Druck einstellt. Es ergibt sich dann entsprechend ein Parabelprofil mit einem Druckmaximum im mittleren Bereich des Hauptkolbens und mit absinkendem Druck zu den Randbereichen hin. Bei den herkömmlichen Lösungen wird der Ausgangsdruck stets im achsnahen mittleren Bereich abgegriffen, so dass ein vergleichsweise hoher bzw. der höchste Druck des Parabelprofils in den rückwärtigen Federraum gemeldet wird. Im Gegensatz dazu wird bei der erfindungsgemäßen Lösung der vergleichsweise geringe Druck in den Randbereichen abgegriffen, so dass aufsummiert rückseitig in Schließrichtung ein geringerer Druck wirkt, als er in Öffnungsrichtung auf die ausgangsseitige Stirnfläche wirkt - die den Hauptkolben in Schließrichtung beaufschlagenden Strömungskräfte können somit kompensiert werden, ohne dass es einer Veränderung der aktiven Flächen bedarf. Der abgegriffene Druck entspricht vorzugsweise einem mittleren effektiven Druck. Dieser mittlere effektive Druck würde bei gleichmäßiger Einwirkung auf die Stirnfläche des Hauptkolbens die gleiche Öffnungskraft ergeben wie die Druckverteilung des Parabelprofils.

Der Ausgleichskanal kann dabei exzentrisch in der Stirnfläche des Hauptkolbens münden.

Die Herstellung des Ausgleichskanals ist besonders einfach, wenn dieser ausgangsseitig zumindest einen achsparallel verlaufenden Mündungskanal hat, der in einem rückseitigen versetzten Kanal mündet.

Dabei können mehrere Mündungskanäle vorgesehen werden, denen jeweils ein versetzter Kanal zugeordnet ist.

Dabei wird es bevorzugt, wenn die Mündungskanalachse näher zur Umfangswandung als zur Hauptkolbenachse angeordnet ist.

Der Durchmesser des Mündungskanals entspricht etwa dem Durchmesser des versetzten Kanals, wobei diese jeweils achsparallel verlaufen.

Bei einer alternativen Lösung kann ausgangsseitig auf den Hauptkolben ein Teller aufgesetzt sein, der mit dem Hauptkolben einen Radialspalt ausbildet, der in dem Ausgleichskanal einmündet oder ein Teil davon ist. Bei einer derartigen Lösung wird somit der am Umfang des Tellers wirksame Druck abgegriffen und über den Radialspalt und den Ausgleichskanal in den rückseitigen Druckraum gemeldet.

Der Teller kann dabei abschnittsweise vom Steueröl durchströmt werden.

Erfindungsgemäß wird es bevorzugt, wenn das Aktivlogik mit einer Vorsteuerung ausgeführt ist, über die die in Öffnungsrichtung wirksame, vergleichsweise kleine Ringstirnfläche mit einem Tankdruck oder einem höheren Druck beaufschlagt ist, um das Aktivlogik zuzuhalten bzw. aufzusteuem.

Sonstige Weiterbildungen der Erfindung sind Gegenstand weiterer Unteransprüche.

Im Folgenden werden bevorzugte Ausführungsbeispiele der Erfindung anhand schematischer Zeichnungen näher erläutert. Es zeigen:
Figur 1 einen stark vereinfachten Hydraulikschaltplan einer Druckgussmaschine mit einem Aktivlogik;
Figur 2 einen Hauptkolben des Aktivlogik aus Figur 1;
Figur 3 die auf den Hauptkolben wirkenden Drücke bei geöffneter Aktivlogik;
Figur 4 einen Hauptkolben mit aufgesetztem Teller;
Figur 5 eine Variante des Ausführungsbeispiels aus Figur 4 mit pilzförmigen Teller,
Figur 6 ein Ausführungsbeispiel eines Aktivlogik mit einem Hauptkolben, dem ein abschnittsweise durchströmter Teller zugeordnet ist, und
Figur 7 eine vereinfachte Schnittzeichnung eines vorgesteuerten 2-Wege-Regelventils gemäß der vorliegenden Erfindung.

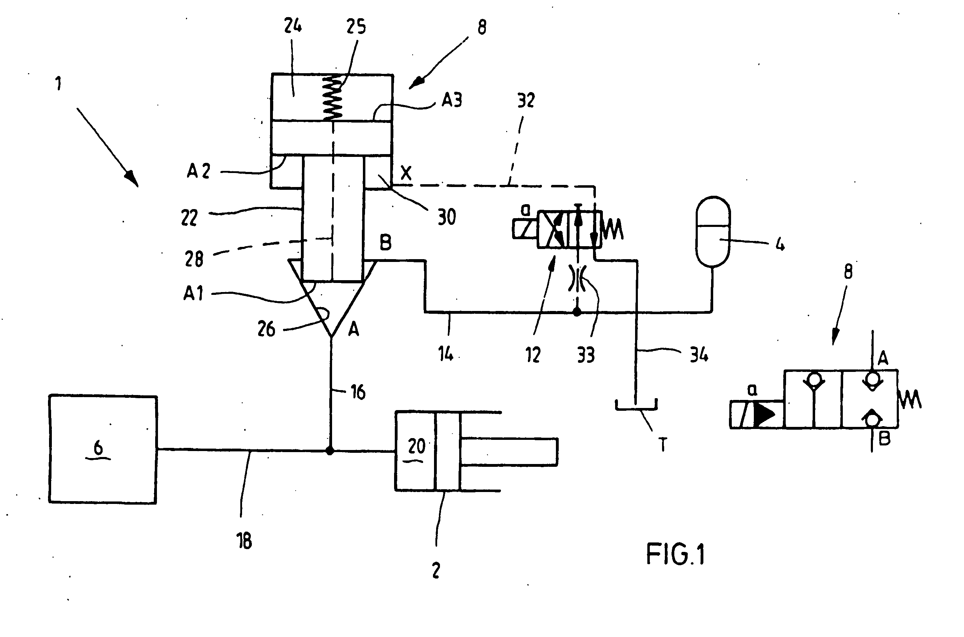

Figur 1 zeigt zunächst in stark vereinfachter Form das Grundprinzip eines hydraulischen Antriebs einer Gießeinheit 1 einer Druckgussmaschine. Ähnliche Gieß- oder Einspritzeinheiten werden auch bei Tixomoulding- oder Spritzgießmaschinen eingesetzt. Die Gießeinheit 1 hat einen Gießzylinder 2, über den das aufgeschmolzene oder teigige Formmaterial in eine Werkzeugkavität eingespritzt wird. Aufgrund des schnellen Erstarrungsprozesses muss dieser Einspritzvorgang (Schuß) mit hoher Geschwindigkeit erfolgen und zum vollständigen Füllen der Werkzeugkavität und zum Verdichten sowie zum Ausgleich der Materialschrumpfung sind dann in der Folge hohe Drücke aufzubringen.

Der Formfüll- oder Gießvorgang lässt sich in drei Phasen unterteilen. In einer ersten Phase wird die Schmelze in eine Gießbüchse eingebracht, in der ein vom Gießzylinder 2 angetriebener Gießkolben axial verschiebbar geführt ist. Während dieses Einfüllens der Schmelze erfolgt die Gießkolbenbewegung relativ langsam.

In der zweiten Phase, dem eigentlichen Formfüllvorgang wird die Werkzeugkavität mit hoher Fließgeschwindigkeit gefüllt - dazu muss der Gießzylinder 2 mit maximaler Geschwindigkeit ausgefahren werden.

In der dritten Phase, der Nachdruckphase wird die Werkzeugkavität dann vollständig gefüllt und der Materialschwund kompensiert. Dazu muss über den Gießzylinder 2 ein sehr hoher Druck aufgebracht werden.

Gemäß dem in Figur 1 dargestellten Schema wird der Druck in den ersten beiden Phasen (Einfüllen der Schmelze und Einspritzen der Schmelze mit hoher Fließgeschwindigkeit in die Werkzeugkavität) von einem Niederdruckspeicher 4 aufgebracht. Beim Umschalten in die dritte Phase (Nachdruckphase) wird dann über nicht dargestellte Steuerelemente auf Hochdruck umgeschaltet, wobei dieser Hochdruck beispielsweise über einen Druckübersetzer 6 aufgebracht werden kann. Zwischen dem Niederdruckspeicher 4 und dem Gießzylinder 2 ist ein erfindungsgemäßes 2/2-Wegeventil, im Folgenden Aktivlogik 8 genannt, vorgesehen, das ein Rückströmen vom Druckmittel vom Gießzylinder 2 zum Niederdruckspeicher 4 verhindern soll. Dieses Aktivlogik 8 muss beim Umschalten auf Hochdruck sehr schnell geschlossen werden, um den Nachdruck mit der erforderlichen Geschwindigkeit aufbauen zu können.

Das Aktivlogik 8 ist als vorgesteuertes Logikventil ausgeführt, wobei bei diesem Ausführungsbeispiel die Vorsteuerung mittels eines Schaltventils 12 erfolgt. Das Aktivlogik hat einen Eingangsanschluss A und einen Ausgangsanschluss B. Der Eingangsanschluss A ist über eine Niederdruckleitung 14 mit dem Speicher 4 verbunden. Der Ausgangsanschluss B ist über eine Verbindungsleitung 16 an eine Druckleitung 18 angeschlossen, über die der Ausgang des Druckübersetzers 6 mit einem bodenseitigen Zylinderraum 20 des Gießzylinders 2 verbunden ist.

Das Aktivlogik 8 hat einen als Stufenkolben ausgeführten Hauptkolben 22, der eine Stirnfläche A₁, eine Ringfläche A₂ und eine rückseitige Schließfläche A₃ aufweist. Die Fläche der Schließfläche A₃ ist gleich der Summe der beiden Flächen A₁ und A₂. Die Schließfläche A₃ begrenzt einen Federraum 24, in dem eine Feder 25 aufgenommen ist, über die der Hauptkolben 22 gegen einen Ventilsitz 26 vorgespannt ist. Im Hauptkolben 22 ist eine Ausgleichsbohrung 28 vorgesehen, über die der Federraum 24 mit einem an den Ausgang B angrenzenden Raum verbunden ist, so dass bei geschlossenem Aktivlogik im Federraum 24 im Wesentlichen der Ausgangsdruck anliegt.

Die Ringfläche A₂ begrenzt einen Ringraum 30, der über eine gestrichelt eingezeichnete Vorsteuerleitung 32 mit einem Anschluss A des Schaltventils 12 verbunden ist. Ein Eingangsanschluss P dieses Schaltventils ist über eine Drossel 33 in einem kurzen Leitungsabschnitt mit der Niederdruckleitung 14 verbunden. Das Schaltventil 12 hat des Weiteren einen Tankanschluss T, der über eine Tankleitung 34 in einem Tank T mündet. In einer federvorgespannten Grundposition ist der Anschluss A des Schaltventils 12 mit dem Tankanschluss T verbunden, der Eingangsanschluss P ist abgesperrt. D. h., in dieser Grundposition ist der Ringraum 30 zum Tank hin entlastet. In der Schaltposition a wird der Druckanschluss P mit dem Anschluss A verbunden, so dass Druck am Eingang über die Niederdruckleitung 14, das Schaltventil 12, die Steuerleitung 32 im Ringraum 30 anliegt und entsprechend die Ringfläche A₂ in Öffnungsrichtung mit diesem Druck beaufschlagt ist. In Öffnungsrichtung wirkt auch der Druck am Ausgang A auf die kleine Stirnfläche A₁. Der Druck im Federraum wirkt in Schließrichtung auf die große Schließfläche A₃.

In den beiden ersten Phasen, d. h. bei der Beschleunigung der Schmelze innerhalb der nicht dargestellten Gießbüchse und beim eigentlichen Formfüllgang wird das Rückschlagventil 8 in seiner Rückschlagfunktion verwendet. Dazu wird das Schaltventil 12 in die Schaltstellung a umgeschaltet, so dass im Ringraum 30 der Eingangsdruck anliegt. Aufgrund der vorstehend beschriebenen Flächenverhältnisse kann der Hauptkolben 22 dann gegen die Kraft der vergleichsweise schwachen Feder 25 durch den Druck am Eingangsanschluss B vom Ventilsitz 26 abgehoben werden, so dass eine Druckmittelverbindung vom Niederdruckspeicher 4 zum Zylinderraum 20 des Gießzylinders 2 besteht und die beiden vorbeschriebenen Phasen (Einfüllen der Schmelze und Formfüllgang) durchfahren werden können.

Beim Umschalten auf die Nachdruckphase wird der Druckübersetzer 6 zugeschaltet, so dass der Druck in der Druckleitung 18 auf Hochdruck ansteigt (400 bar). In dieser Umsteuerphase wird auch das Schaltventil 12 in seine Grundposition zurückgeschaltet, so dass der Ringraum 30 zum Tank T hin entlastet ist. D. h., auf die Ringfläche A₂ wirkt nur noch der Tankdruck. Der sich in der Druckleitung 18 aufbauende Druck liegt über die Verbindungsbohrung 28 auch im Federraum 24 an, so dass der Hauptkolben 12 aufgrund der Flächendifferenz A₃ - A₁ äußerst schnell und mit großer Kraft in Schließrichtung beaufschlagt ist und im Millisekundenbereich schließt, so dass der Hochdruck im Zylinderraum 20 für die Nachdruckphase in wesentlich kürzerer Geschwindigkeit als bei Schaltungen aufgebaut werden kann, bei denen die eingangs beschriebenen Rückschlagventile eingesetzt werden. Das Schaltsymbol eines erfindungsgemäßen Rückschlagventils 8 mit einer Sperrstellung und einer Rückschlagfunktion ist in Figur 1 rechts eingezeichnet.

Die Schließzeit lässt sich weiter verkürzen, wenn anstelle des Schaltventils 12 gemäß Figur 1 eine Vorsteuerung verwendet wird, bei der das Schaltventil 12 praktisch als Vorsteuerung eines Vorsteuerlogikventils verwendet wird.

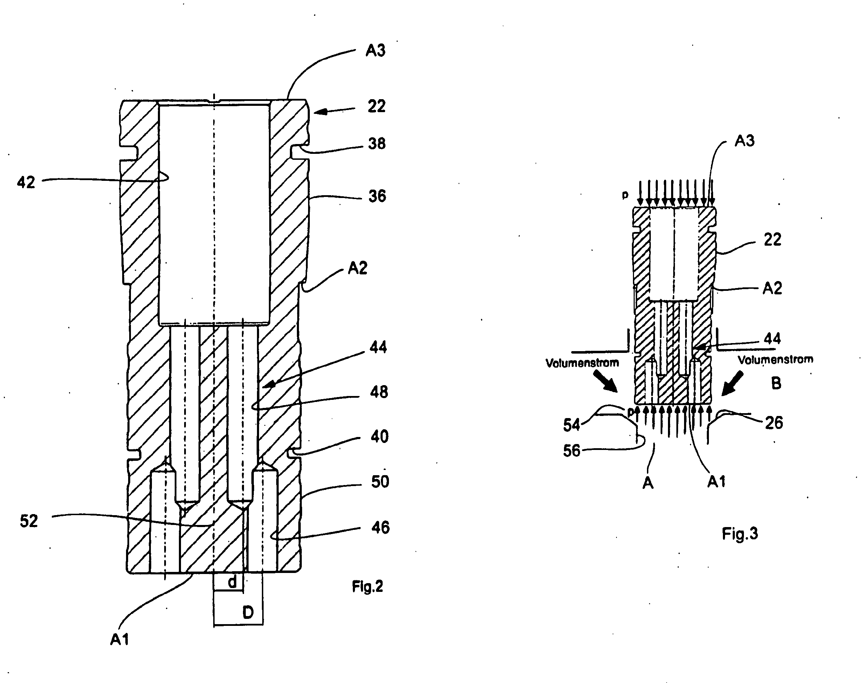

Figur 2 zeigt eine Einzeldarstellung einer konkreten Lösung eines Hauptkolbens 22 eines ersten Ausführungsbeispiels des Aktivlogik 8 für eine Schaltung gemäß Figur 1.

Wie eingangs ausgeführt, ist der Hauptkolben 22 als Stufenkolben mit der ausgangsseitigen Stirnfläche A1, der Ringstirnfläche A2 und der rückwärtigen, den Federraum abschnittsweise begrenzenden Schließfläche A3 ausgeführt, wobei die Summe A1 + A2 = A3 ist. D.h. die in Öffnungs- und Schließrichtung wirksamen Flächenabschnitte des Hauptkolbens 22 sind mit der gleichen Größe ausgeführt. Dabei geht die Ringstirnfläche A2 über einen leichten Konus 36 in den oberen zylindrischen Abschnitt über, wobei die Stirnflächenanteile des Konus 36 in die Fläche A2 eingehen. An dem in Figur 2 oben liegenden Endabschnitt mit größerem Durchmesser des Hauptkolbens 22 ist eine Ringnut 38 zur Aufnahme eines Dichtrings oder dergleichen vorgesehen. An dem in Figur 2 unteren, rückgestuften Endabschnitt des Hauptkolbens 22 ist eine entsprechende Ringnut 40 ausgebildet, die ebenfalls zur Aufnahme eines Dichtrings vorgesehen ist, so dass die abschnittsweise von der Fläche A1 und der Fläche A2 bzw. von der Fläche A2 und der rückwärtigen Stirnfläche A3 abgegrenzten Druckräume gegeneinander abgedichtet sind.

In Verlängerung des in Figur 2 nicht dargestellten Federraums 24 ist der Hauptkolben 22 mit einer Aufnahmebohrung 42 ausgebildet, in die der in Figur 1 unten liegende Endabschnitt der Feder 25 eintaucht, um den Hauptkolben 22 in Richtung seines Ventilsitzes (siehe Figur 1) zu beaufschlagen. Die Aufnahmebohrung 42 bildet somit einen Teil des rückwärtigen Federraums 24. Dieser ist über Ausgleichskanäle 44 mit einem ausgangsseitigen Druckraum des Aktivlogik 8 verbunden - mit anderen Worten gesagt, im Grundzustand des Aktivlogik 8 mit auf dem Ventilsitz 26 aufsitzendem Hauptkolben 22 und entlasteter Fläche A2 wirkt in die Aufnahmebohrung 42 und damit im Federraum 24 der gleiche Druck wie am Ausgang A. Bei der dargestellten Lösung sind mehrere Ausgleichskanäle, beispielsweise vier, auf einem gemeinsamen Teilkreis verteilt. Jeder Ausgleichskanal 44 hat einen Mündungskanal 46 und einen rückseitigen Kanal 48, deren Achsen zueinander versetzt sind und somit im Parallelabstand verlaufen. Gemäß der Darstellung in Figur 2 liegen die Mündungskanäle 46 auf einem Teilkreis mit dem Durchmesser D, während die aufnahmebohrungsseitigen Kanäle 48 auf einem kleineren Teilkreisdurchmesser d liegen. Der Durchinesserunterschied D - d ist dabei geringer als der zweifache Durchmesser x der beiden Kanäle 46, 48, die beim dargestellten Ausführungsbeispiel etwa mit dem gleichen Durchmesser x ausgeführt sind. Der Durchmesser d ist dabei geringer als der Durchmesser der Aufnahmebohrung 24. Die Herstellung dieser Kanäle 46, 48 ist besonders einfach, da die Mündungskanäle 46 von der Stirnfläche A1 her und die Kanäle 48 von der Aufnahmebohrung her gebohrt werden können, wobei die jeweilige Bohrungstiefe so gewählt ist, dass die Kanäle 46, 48 einander überlappen und somit schneiden. Durch diese Verschneidung der Kanäle 46, 48 wird somit eine Druckmittelverbindung zwischen dem rückwärtigen Federraum 24 und dem ausgangsseitigen Bereich hergestellt.

Der Durchmesser D des Teilkreises der mündungsseitigen Kanäle 46 ist so gewählt, dass diese näher zur benachbarten Außenumfangswandung 50 als zur Achse 52 des Hauptkolbens 22 angeordnet sind. Vorzugsweise soll jedoch ein gewisser abstand zum Hauptkolbenumfang eingehalten werden. Der ausgangsseitige Druck wird somit an den radial außen liegenden Bereichen des Hauptkolbens 22 abgegriffen.

Dies führt zu einem Effekt, der anhand der Figur 3 näher erläutert ist. Diese zeigt eine schematische Darstellung des Aktivlogik in einem Zustand, in dem der Hauptkolben 22 vom Ventilsitz 26 abgehoben ist und somit eine Druckmittelverbindung vom Eingang B zum Ausgang A aufgesteuert ist. Das Druckmittel strömt dann durch den vom Hauptkolben 22 einerseits und vom Ventilsitz 26 andererseits begrenzten Ringspalt 54 hindurch zu einem Ausgangskanal 56 mit vergleichsweise großer lichter Weite. D.h. die Strömungsgeschwindigkeit des Druckmittels ist im Bereich des Ringspalts 54 größer als im Bereich des Ausgangskanals 56, so dass sich gemäß dem Gesetz nach Bernoulli ein Druckprofil ergibt, dessen Maximum im mittigen Bereich der Stirnfläche A1 liegt, während an den Randbereichen ein geringerer Druck herrscht. Dieser vergleichsweise geringere Druck wird über die Ausgleichsbohrungen 44 abgegriffen und wirkt dann auch auf die den rückwärtigen Federraum 24 begrenzende Schließfläche A3. Die zusätzlich in Öffnungsrichtung wirksame Ringstirnfläche A2 ist mit dem Druck am Eingangsanschluss B beaufschlagt. Da auf die Rückseite des Hauptkolbens 22 ein verhältnismäßig geringer Druck wirkt, kann der Hauptkolben 22 mit einer relativ kleinen Ringstirnfläche A2 verstellt werden. Dementsprechend macht das Aktivlogik in der Rückschlagfunktion weiter auf, so dass der Druckabfall im Bereich des Ringspalts 54 geringer wird und somit ein höherer Druck zur Beschleunigung des Gießzylinders 2 zur Verfügung steht. Bei den herkömmlichen Lösungen wird dagegen der mittige, vergleichsweise hohe Druck über die mittigen Ausgleichsbohrungen abgegriffen und dem Federraum 44 gemeldet, so dass die in Schließrichtung wirksamen Kräfte wesentlich höher sind und somit auch eine größere Ringstirnfläche A2 (Stellfläche) erforderlich ist.

Selbstverständlich lässt sich das erfindungsgemäße Konzept, den in Schließrichtung im Federraum wirksamen Druck radial außen liegend abzugreifen, auch auf andere Weise realisieren.

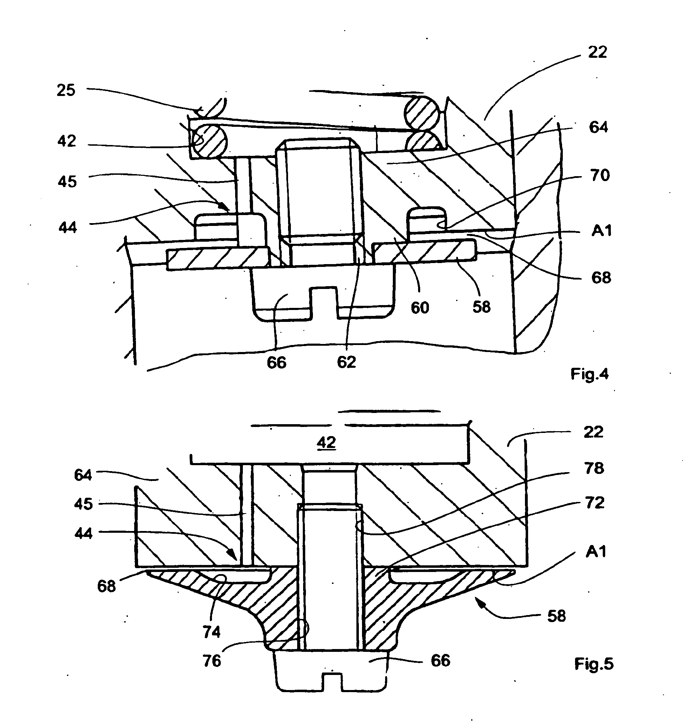

In den Figuren 4, 5 und 6 sind Ausführungsbeispiele dargestellt, bei denen jeweils auf den Hauptkolben 22 ein Teller 58 aufgesetzt ist, der mit der Stirnfläche A1 des Hauptkolbens 22 jeweils einen radialen Schlitz bildet, der in den Ausgleichskanal einmündet oder ein Teil des Ausgleichkanals 44 ist. Dadurch wird der gleiche Effekt wie beim Ausführungsbeispiel gemäß Figur 2 erreicht: Es wird der geringere, in Randbereichen der Hauptkolbenstirnfläche wirkende Druck abgegriffen und somit die in Schließrichtung wirksamen Kräfte verringert.

Bei dem in Figur 4 dargestellten Ausführungsbeispiel ist an der ausgangsseitigen Stirnfläche A1 des Hauptkolbens 22 ein zweifach gestufter Axialvorsprung 62 ausgebildet, auf die der bei diesem Ausführungsbeispiel als Ringscheibe ausgeführte Teller 58 aufgesetzt wird, so dass ein Zentralvorsprung 62 in die mittige Öffnung des Tellers 58 eintaucht und bündig mit diesem abschließt. In diesen Axialvorsprung 60 und den sich daran anschließenden Boden 64 wird dann eine Schraube 66 eingesetzt, um den Teller 58 sowohl in Axialrichtung als auch in Radialrichtung zu sichern. Das Auflager des Axialvorsprungs 60 ist dabei so gewählt, dass zwischen der Stirnfläche A1 und der benachbarten Großfläche des Tellers 58 ein Radialspalt 68 verbleibt. Dieser mündet in einer stirnseitigen Ringausnehmung 70 des Hauptkolbens 22, in der wiederum eine Ausgleichsbohrung 45 mündet, über den die Druckmittelverbindung zur Aufnahmebohrung 42 für die Feder 25 hergestellt wird, so dass der ausgangsseitige Druck auch im rückwärtigen Federraum wirkt. Der Ausgleichkanal 44 ist somit durch die Ausgleichsbohrung 45, den Radialspalt 68 und die Ringausnehmung 70 gebildet.

Da der Radialspalt 68 an den stirnseitigen Randbereichen des Hauptkolbens 22 mündet (der Außendurchmesser des Tellers 58 ist etwa mit dem Durchmesser D (Figur 2) ausgeführt), wird auch bei dieser Lösung der vergleichsweise geringere Druck in den Randbereich abgegriffen und somit die in Schließrichtung wirksamen Druckkräfte verringert.

Figur 5 zeigt eine Variante, die nach dem gleichen Konzept arbeitet. Bei dieser Lösung ist kein ringscheibenförmiger sondern ein pilzförmiger Teller 58 vorgesehen, der mit einem axialen Stützvorsprung 72 an der Stirnfläche A1 des Hauptkolbens 22 anliegt. Die benachbarte Stirnfläche des Tellers 58 ist radial außerhalb des Stützvorsprungs 72 etwas zurückgestuft, so dass sich wiederum der Radialspalt 68 zwischen der Stirnfläche A1 und dem Teller 58 ergibt. Der Radialspalt 68 mündet in einer umlaufenden Stirnausnehmung 74 des Tellers 58, die den Stützvorsprung 72 umgreift. Im Boden 64 des Hauptkolbens 22 ist wiederum eine Ausgleichsbohrung 45 des Ausgleichskanals 44 vorgesehen, die einerseits im Aufnahmeraum 42 und andererseits im Radialspalt 68 bzw. in der umlaufenden Stirnausnehmung 74 mündet.

Die Befestigung des pilzförmigen Tellers 58 gemäß Figur 5 erfolgt über eine Schraube 66, die eine Axialbohrung 76 des Tellers 58 durchsetzt und in eine Befestigungsbohrung 78 des Hauptkolbens 22 eingeschraubt ist. Gemäß Figur 5 erstreckt sich der Teller 58 in radialer Richtung noch weiter als der ringscheibenförmige Teller 58 in Figur 4 nach außen, so dass ein noch geringerer Druck abgegriffen und in den rückseitigen Druckraum gemeldet wird. Ein Abstand zum Umfangsrand des Hauptkolbens 22 wird jedoch auch bei diesem Ausführungsbeispiel eingehalten.

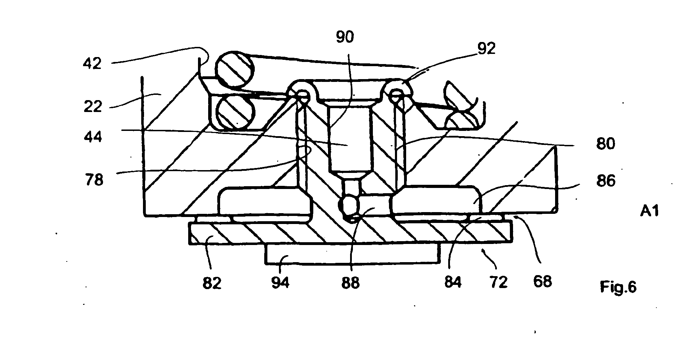

Figur 6 zeigt eine weitere Variante dieses Konzeptes. Dabei ist der Teller 58 mit einem axialen Gewindezapfen 80 ausgeführt, der aus einem Tellerabschnitt 82 in Axialrichtung vorsteht und in eine Befestigungsbohrung 78 des Hauptkolbens 22 eingeschraubt ist. Der Tellerabschnitt 82 hat an seiner rückwärtigen, dem Hauptkolben 22 zugewandten Ringstirnfläche eine Vielzahl von Stützvorsprüngen 84, die an der Stirnfläche A1 des Kolbens anliegen. Die Axiallänge dieser Stützvorsprünge 84 ist so gewählt, dass zwischen dem Tellerabschnitt 82 und der Stirnfläche A1 der Radialspalt 68 verbleibt. Die Stirnfläche A1 des Hauptkolbens 22 ist mit einer Ausdrehung 86 versehen, in der eine Winkelbohrung 88 des Gewindezapfens 80 mündet. Der in Figur 6 vertikale Schenkel der Winkelbohrung 88 mündet in einem radial erweiterten Axialkanal 90, der seinerseits die Druckmittelverbindung zur Aufnahmebohrung 42 herstellt. Zur Axialsicherung ragt ein Endabschnitt des Gewindezapfens 80 in die Aufnahmebohrung 42 hinein und ist dann durch Bördeln mit einem Bördelkragen 92 versehen. Bei dieser Variante ist somit der Ausgleichkanal 44 (Axialbohrung 90, Winkelbohrung 88) in den Teller 58 integriert.

Zum Vereinfachen des Einschraubens des Tellers 58 ist an dessen ausgangsseitiger Stirnfläche ein Mehrkant 94 vorgesehen.

Die Wirkung des Tellers 58 ist die gleiche wie bei den zuvor beschriebenen Ausführungsbeispielen, über den im Randbereich des Hauptkolbens 22 mündenden Radialspalt 68 wird der vergleichsweise niedrige Druck abgegriffen und in den rückwärtigen Federraum gemeldet - die in Schließrichtung wirksamen Druckkräfte sind dann minimal.

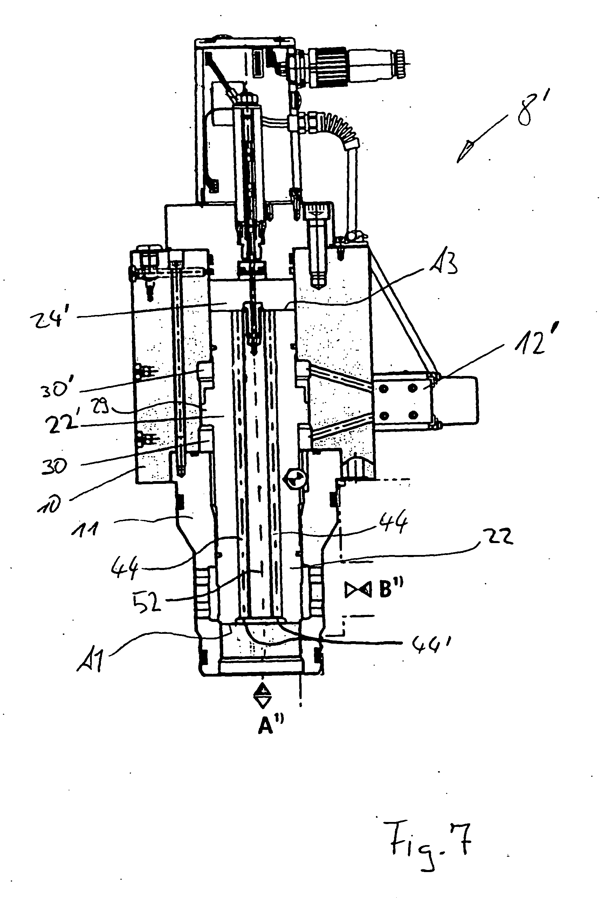

In Figur 7 ist als weiteres Ausführungsbeispiel der vorliegenden Erfindung ein proportional verstellbares Wegeventil 8' gezeigt. Soweit möglich wurden für übereinstimmende Merkmale gleiche Bezugszeichen wie in dem vorhergehenden Ausführungsbeispiel verwendet. Das Wegeventil 8' ist als 2-Wege-Regelventil aufgebaut. In einem Gehäuse bestehend aus einem sogenannten Steuerdeckel 10 und einer Ventilbuchse 11 ist ein Hauptkolben 22 beweglich geführt. Am Hauptkolben 22 ist an einem Betätigungsabschnitt 22' ein ringartiger Vorsprung 29 gebildet, durch den zwischen dem Gehäuse und dem Hauptkolben 22 zwei Ringräume 30 und 30' abgegrenzt sind. Über das Vorsteuerventil 12', welches in diesem Fall ein 4/4-Wege-Proportionalventil ist, können die Ringräume 30 und 30' mit Druckmittel beaufschlagt werden. Dadurch wird eine Verstellung des Hauptkolbens 22 entlang seiner Längsachse bewirkt. Im Hauptkolben 22 befinden sich zwei Kanäle 44. Diese sind als durchgehende Bohrungen ausgeführt. Die Bohrungen der Kanäle 44 münden an der Stirnfläche A1 außermittig der Längsachse 52 des Hauptkolbens 22.

Dadurch tritt der im vorangehenden Ausführungsbeispiel und in der Einleitung beschriebene Effekt auf: Der auf die Rückseite in den Druckraum 24' gemeldete Druck entspricht nicht dem Maximaldruck eines Druckprofils, welches sich bei geöffnetem Ventil an der Stirnfläche A1 ausbildet. Vielmehr wird abhängig vom radialen Abstand der Mündung 44' der Kanäle 44 zur Längsachse 52 ein geringerer Druck in den Druckraum 24' gemeldet. Durch geschickte Wahl des Radialabstands der Mündungen 44' von der Längsachse 52 wird aus dem an der Fläche A1 bei geöffneten Ventil vorhandenen Druckprofil ein Druck ausgewählt, welcher in etwa einem mittleren, effektiv auf die Stirnfläche A1 wirkenden Druck entspricht. Die Höhe des mittleren effektiven Drucks wird gedanklich durch eine Integration des Druckprofils über die Fläche A1 ermittelt. Der Radialabstand wird zweckmäßiger Weise im praktischen Anwendungsfall z.B. durch Versuche so gewählt, dass auch bei geöffneten Ventil und unter wechselnden Durchströmungswerten Q eine möglichst guter Druckausgleich zwischen der Stirnfläche A1 und der Stirnfläche A3 des Hauptkolbens 22 erzielt wird.

Die vorangehend beschriebenen Ausführungsbeispiele und Figuren dienen lediglich dem besseren Verständnis der vorliegenden Erfindung, sie schränken die Erfindung nicht etwa auf die Ausführungsbeispiele ein. Die Figuren sind teilweise grob schematisch gehalten, der Effekt bzw. die Auswirkungen zum Teil deutlich vergrößert bzw. übertrieben dargestellt, um die Funktionsweisen, Wirkprinzipien, technischen Ausgestaltungen und Merkmale zu verdeutlichen. Grundsätzlich kann jede Funktionsweise, jedes Prinzip, jede technische Ausgestaltung und jedes Merkmal, welches/welche in den Figuren oder im Text gezeigt ist/sind, mit allen Ansprüchen, jedem Merkmal im Text und in den anderen Figuren, anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen dem Offenbarungsumfang der Erfindung hinzuzurechnen sind. Dabei sind auch Kombinationen zwischen allen einzelnen Ausführungen im Text, d.h. in jedem Abschnitt des Beschreibungstexts, in den Ansprüchen und auch Kombinationen zwischen verschiedenen Ausführungsbeispielen im Text, in den Ansprüchen und in den Figuren umfasst.

Auch die Ansprüche begrenzen bzw. limitieren nicht die Offenbarung und damit die Kombinationsmöglichkeiten aller aufgezeigten Merkmale untereinander. Alle aufgezeigten Merkmale sind explizit auch einzeln und in Kombination mit allen anderen Merkmalen der Erfindung von dieser Offenbarung umfasst.

Offenbart ist unter Anderem ein 2/2-Wegeventil oder ein Aktivlogik mit einem Hauptkolben, der gegen einen Ventilsitz vorgespannt ist und der eine in Öffnungsrichtung wirksame Stirnfläche sowie eine rückseitige Schließfläche hat, die beide von einem ausgangsseitigen Druck beaufschlagt sind. Der Hauptkolben hat des Weiteren eine Ringstirnfläche, die ebenfalls in Öffnungsrichtung wirkt und die zum Aufsteuern mit einem geeigneten Druck beaufschlagbar ist. Im Hauptkolben ist ein Ausgleichskanal vorgesehen, über die eine Druckmittelverbindung zwischen einem ausgangsseitigen Druck und einem rückwärtigen Federraum hergestellt wird. Erfindungsgemäß mündet dieser Ausgleichskanal ausgangsseitig in radial außen liegenden Bereichen des Hauptkolbens.

Offenbart ist zudem ein Wegeventil mit einem Gehäuseelement - insbesondere einer Ventilbuchse -, welches eine Ventilbohrung und zumindest einen als Axialbohrung ausgeführten Druckmittelanschluss sowie einen als Radialbohrung ausgeführten Druckmittelanschluss aufweist. Es besitzt zudem einen in der Ventilbohrung beweglich geführten Hauptkolben, durch welchen ein Öffnungsquerschnitt zwischen den besagten Druckmittelanschlüssen steuerbar ist. Der Hauptkolben besitzt eine erste der Axialbohrung zugewandte Stirnfläche und eine zweite auf der gegenüberliegenden Seite angeordnete Stirnfläche und einen beide Stirnflächen fluidisch verbindenden Ausgleichskanal. Die Besonderheit gegenüber herkömmlichen Wegeventilen liegt darin, dass der Ausgleichskanal an der ersten Stirnfläche so mündet, dass ein auf radial außermittig liegende Bereiche der ersten Stirnfläche, insbesondere auf radial außen liegende Bereiche der ersten Stirnfläche, wirkender Druck abgegriffen wird.

### Bezugszeichenliste:

- 1: Gießeinheit
- 2: Gießzylinder
- 4: ND-Speicher
- 6: Druckübersetzer
- 8: Aktivlogik
- 8': Wegeventil
- 10: Steuerdeckel
- 11: Ventilbuchse
- 12: Schaltventil
- 12': Vorsteuerventil
- 14: Niederdruckleitung
- 16: Verbindungsleitung
- 18: Druckleitung
- 20: Zylinderraum
- 22: Hauptkolben
- 22': Betätigungsabschnitt
- 24: Federraum
- 24': Druckraum
- 25: Feder
- 26: Ventilsitz
- 28: Verbindungsbohrung
- 29: Ringvorsprung
- 30: Ringraum
- 30': Ringraum
- 32: Steuerleitung
- 33: Drossel
- 34: Tankleitung
- 36: Konus
- 38: Ringnut
- 40: Ringnut
- 42: Aufnahmebohrung
- 44: Ausgleichskanal
- 44': Mündung
- 45: Ausgleichsbohrung
- 46: Mündungskanal
- 48: Kanal
- 50: Außenumfangswandung
- 52: Achse
- 54: Ringspalt
- 56: Ausgangskanal
- 58: Teller
- 60: Axialvorsprung
- 62: Zentralvorsprung
- 64: Boden
- 66: Schraube
- 68: Radialspalt
- 70: Ringausnehmung
- 72: Stützvorsprung
- 74: Stirnausnehmung
- 76: Axialbohrung
- 78: Befestigungsbohrung
- 80: Gewindezapfen
- 82: Tellerabschnitt
- 84: Stützvorsprung
- 86: Ausdrehung
- 88: Winkelbohrung
- 90: Axialkanal
- 92: Bördelkragen

## Patentansprüche

1. Wegeventil mit einem Gehäuseelement, welches eine Ventilbohrung und zumindest einen als Axialbohrung ausgeführten Druckmittelanschluss (A) sowie einen als Radialbohrung ausgeführten Druckmittelanschluss (B) aufweist, und
mit einem in der Ventilbohrung beweglich geführten Hauptkolben (22), durch welchen ein Öffnungsquerschnitt zwischen den besagten Druckmittelanschlüssen (A, B) steuerbar ist, und welcher eine erste der Axialbohrung zugewandte Stirnfläche (A1) besitzt und eine zweite auf der gegenüberliegenden Seite angeordnete Stirnfläche (A3) und welcher mit einem beide Stirnflächen (A1, A3) fluidisch verbindenden Ausgleichskanal (44) versehen ist, wobei der Ausgleichskanal (44) an der ersten Stirnfläche (A1) so mündet, dass ein auf radial außermittig liegende Bereiche der ersten Stirnfläche (A1) wirkender Druck abgegriffen wird, **dadurch gekennzeichnet, dass** der Ausgleichskanal (44) an der ersten Stirnfläche (A1) so mündet, dass ein an der zweiten Stirnfläche (A3) anliegender Druck einem mittleren, an der Stirnfläche (A1) effektiv wirksamen Druck eines Druckprofils entspricht, wobei sich das Druckprofil unter Berücksichtigung von an einer Steuerkante zwischen dem Hauptkolben (22) und der Radialbohrung (B) auftretenden Strömung ausbildet, und dass der Hauptkolben (22) eine Ringstirnfläche (A2) hat, die ebenfalls in Öffnungsrichtung wirkt und die zum Aufsteuern mit einem Druck beaufschlagbar ist.

2. Wegeventil nach Patentanspruch 1, wobei der Ausgleichskanal (44) exzentrisch in der Stirnfläche (A1) mündet.

3. Wegeventil nach Patentanspruch 2, wobei der Ausgleichskanal (44) ausgangsseitig einen achsparallel verlaufenden Mündungskanal (46) hat, der in einen rückseitigen, zur Ventilachse (52) hin versetzten Kanal (48) mündet.

4. Wegeventil nach Patentanspruch 3, wobei die Durchmesser (x) des Mündungskanals (46) und des Kanals (48) etwa gleich sind.

5. Wegeventil nach Patentanspruch 3 oder 4, wobei die beiden Kanäle (46, 48) parallel verlaufen.

6. Wegeventil nach einem der Patentansprüche 3 bis 5, wobei mehrere Mündungskanäle (46) vorgesehen sind, denen jeweils ein Kanal (48) zugeordnet ist.

7. Wegeventil nach einem der Patentansprüche 2 bis 6, wobei die Achse der Mündungskanäle (46) näher zur Außenumfangswandung (50) des Hauptkolbens (22) angeordnet ist als dessen Achse (52).

8. Wegeventil nach einem der vorhergehenden Patentansprüche, wobei ausgangsseitig auf den Hauptkolben (22) ein Teller (58) aufgesetzt ist, der mit dem Kolben (22) einen Radialspalt (68) bildet, der Teil des Ausgleichskanals (44) ist.

9. Wegeventil nach Patentanspruch 8, wobei der Teller (58) vom Steueröl unterströmt bzw. durchströmt ist.

## Claims

1. Directional valve with a housing element, which has a valve bore and at least one pressure-medium connection (A) designed as an axial bore and also a pressure-medium connection (B) designed as a radial bore, and with a main piston (22) which is guided movably in the valve bore and by means of which an opening cross section between the said pressure-medium connections (A, B) can be controlled, and which possesses a first end face (A1) confronting the axial bore and a second end face (A3) arranged on the opposite side and which is provided with an equalizing duct (44) connecting the two end faces (A1, A3) fluidically, the equalizing duct (44) issuing on the first end face (A1) such that a pressure acting upon radially off-centre regions of the first end face (A1) is picked off, **characterized in that** the equalizing duct (44) issues on the first end face (A1) such that a pressure prevailing at the second end face (A3) corresponds to a mean pressure, active effectively on the end face (A1), of a pressure profile, the pressure profile being formed, with account being taken of a flow occurring at a control edge between the main piston (22) and the radial bore (B), and **in that** the main piston (22) has an annular end face (A2) which likewise acts in the opening direction and which can be acted upon with a pressure for opening purposes.

2. Directional valve according to Patent Claim 1, the equalizing duct (44) issuing eccentrically in the end face (A1).

3. Directional valve according to Patent Claim 2, the equalizing duct (44) having on the outlet side an issue duct (46) which runs axially parallel and which issues into a rear duct (48) offset with respect to the valve axis (52).

4. Directional valve according to Patent Claim 3, the diameters (x) of the issue duct (46) and of the duct (48) being approximately identical.

5. Directional valve according to Patent Claim 3 or 4, the two ducts (46, 48) running parallel.

6. Directional valve according to one of Patent Claims 3 to 5, a plurality of issue ducts (46) being provided, to which a duct (48) is assigned in each case.

7. Directional valve according to one of Patent Claims 2 to 6, the axis of the issue ducts (46) being arranged nearer to the outer circumferential wall (50) of the main piston (22) than the axis (52) of the latter.

8. Directional valve according to one of the preceding patent claims, a disc (58) being placed on the main piston (22) on the outlet side and forming with the piston (22) a radial gap (68) which is part of the equalizing duct (44).

9. Directional valve according to Patent Claim 8, the control oil flowing under or flowing through the disc (58).

## Revendications

1. Distributeur comprenant un élément de boîtier qui présente un alésage de soupape et au moins un raccord de milieu sous pression (A) réalisé sous forme d'alésage axial, ainsi qu'un raccord de milieu sous pression (B) réalisé sous forme d'alésage radial, et
comprenant un piston principal (22) guidé de manière mobile dans l'alésage de soupape, à travers lequel une section transversale d'ouverture entre lesdits raccords de milieu sous pression (A, B) peut être commandée, et qui possède une première surface frontale (A1) tournée vers l'alésage axial et une deuxième surface frontale (A3) disposée sur le côté opposé et qui est pourvu d'un canal de compensation (44) reliant fluidiquement les deux surfaces frontales (A1, A3), le canal de compensation (44) débouchant au niveau de la première surface frontale (A1) de telle sorte qu'une pression agissant sur des régions de la première surface frontale (A1) situées de manière décentrée radialement soit prélevée, **caractérisé en ce que** le canal de compensation (44) débouche au niveau de la première surface frontale (A1) de telle sorte qu'une pression s'appliquant sur la deuxième surface frontale (A3) corresponde à une pression moyenne d'un profil de pression agissant de manière effective sur la surface frontale (A1), le profil de pression se formant en tenant compte d'un écoulement existant au niveau d'une arête de commande entre le piston principal (22) et l'alésage radial (B), et **en ce que** le piston principal (22) présente une surface frontale annulaire (A2) qui agit également dans la direction d'ouverture et qui peut être sollicitée avec une pression en vue de sa commande d'ouverture.

2. Distributeur selon la revendication 1, dans lequel le canal de compensation (44) débouche de manière excentrée dans la surface frontale (A1).

3. Distributeur selon la revendication 2, dans lequel le canal de compensation (44) a, du côté de la sortie, un canal d'embouchure (46) s'étendant avec son axe parallèle, qui débouche dans un canal (48) du côté arrière, décalé par rapport à l'axe de la soupape (52).

4. Distributeur selon la revendication 3, dans lequel le diamètre (x) du canal d'embouchure (46) et du canal (48) sont approximativement identiques.

5. Distributeur selon la revendication 3 ou 4, dans lequel les deux canaux (46, 48) s'étendent parallèlement.

6. Distributeur selon l'une quelconque des revendications 3 à 5, dans lequel plusieurs canaux d'embouchure (46) sont prévus, auxquels est à chaque fois associé un canal (48).

7. Distributeur selon l'une quelconque des revendications 2 à 6, dans lequel l'axe des canaux d'embouchure (46) est disposé plus près de la paroi périphérique extérieure (50) du piston principal (22) que l'axe de celui-ci (52).

8. Distributeur selon l'une quelconque des revendications précédentes, dans lequel un plateau (58) est posé du côté de la sortie sur le piston principal (22), lequel forme avec le piston (22) une fente radiale (68) qui fait partie du canal de compensation (44).

9. Distributeur selon la revendication 8, dans lequel le plateau (58) est parcouru sous sa surface ou est traversé par de l'huile de commande.
